# EUROPEAN PATENT SPECIFICATION

(11) **EP 1 197 570 B1**
(45) Date of publication and mention of the grant of the patent: **29.12.2004**
(21) Application number: 01308419.9
(22) Date of filing: 02.10.2001
(51) Int. Cl.: C22C 19/05, C22F 1/10

(54) **Nickel-base alloy and its use in forging and welding operations**
Legierung auf Nickel-Basis und deren Verwendung bei Schmiede- oder Schweissvorgängen
Alliage à base de nickel et son utilisation pour des operations de soudage ou de forgeage

(30) Priority: 13.10.2000 US 687424
(43) Date of publication of application: 17.04.2002
(73) Proprietor: GENERAL ELECTRIC COMPANY, Schenectady, NY 12345 (US)
(72) Inventor: Groh, Jon Raymond, Loveland, Ohio 45150 (US); Raymond, Edward Lee, Maineville, Ohio 45039 (US)
(74) Representative: Szary, Anne Catherine, Dr.

(56) References cited:
- US-A- 4 652 315
- US-A- 4 981 644
- US-A- 5 330 711
- US-A- 5 338 379
- M.J. WAHLL, D.J. MAYKUTH, H.J. HUCEK: "Handbook of Superalloys" 1979 , BATTELLE PRESS , COLUMBUS, OHIO XP002201248 ISBN: 0-935470-01-8 * page 60 *
- PATENT ABSTRACTS OF JAPAN vol. 1998, no. 02, 30 January 1998 (1998-01-30) -& JP 09 268337 A (HITACHI METALS LTD), 14 October 1997 (1997-10-14)

## Description

This invention relates to a nickel-base alloy and its use in the production of forgings and welded articles.

The higher the operating temperature of a gas turbine engine, the greater is its efficiency. There is consequently an ongoing effort to raise the operating temperature, with the result that many of the components of the gas turbine engine, including forged components, are pushed to ever-higher service temperatures. The metallic alloy selected for each forged component must be both forgeable to the required configuration in a commercially acceptable manner and also exhibit suitable mechanical properties at elevated service temperatures.

The nickel-base Alloy 718 is widely employed in aerospace and other applications to produce forgings and fabrications that are used at elevated service temperatures of up to about 621°C (1150°F) and for a time which is a function of the service temperature. The primary strengthening mechanism of Alloy 718 is based upon delta (δ)-phase (Ni₃Nb) and body-centered tetragonal gamma double prime (γ")-phase (Ni₃(Nb,Ta, Al,Ti)) precipitation. Alloy 718 does not have sufficient mechanical properties and microstructural stability for many higher-temperature service applications.

In conventional practice, if the forged article is to be used at higher service temperatures, alloys strengthened by ordered face centered cubic gamma prime (γ')-phase (Ni₃(Al,Ti)) precipitation are used. Examples are Waspaloy and Rene' 41 alloys. These gamma prime strengthened alloys have the necessary high-temperature mechanical performance, but they are difficult to forge in a commercially acceptable manner. The gamma prime strengthened alloys are susceptible to surface cracking during the forging operation. The surface cracks may be removed by grinding after the forging operation, but such rework procedures are costly in the labor required and also because the forging must be made oversize and a considerable amount of material wasted. These alloys are quite expensive to purchase in the form of large billets used to make large forgings, and the wasted material may be a substantial fraction of the cost of the final forged article. In addition, fabrication of structures by fusion welding is difficult in gamma prime-strengthened alloys due to strain age cracking.

In summary, alloys such as Alloy 718 exhibit good forging and welding properties but have insufficient mechanical properties and stability at service temperatures above about 621°C (1150°F). Alloys such as Waspaloy and Rene 41 are difficult and expensive to forge and weld, but have acceptable mechanical properties at higher service temperatures.

There is a need for an alloy that is both forgeable and weldable in commercialscale production without the need for expensive rework operations during forging, and also exhibits acceptable mechanical properties at elevated service temperatures. The present invention fulfills this need, and further provides related advantages.

The present invention provides an alloy that is readily forgeable in commercial operations, without the need for extensive rework of surface cracks and without the need for the billet to be supplied excessively oversize to allow for rework of surface cracks. The result is substantially lower production costs for forged articles than is possible with the gamma prime phase-strengthened forged articles. The alloy material is also readily welded. The material, when processed to a final forged article, exhibits excellent stability and mechanical properties at elevated service temperatures up to about 704°C (1300°F).

A composition of matter has a composition consisting of, in weight percent, from 16 percent to 21 percent chromium, from 6 percent to 12 percent iron (more preferably from 8 percent to 9.5 percent iron, and most preferably 9 percent iron), from 6 percent to 12 percent cobalt (and preferably with the total of iron and cobalt constant at 18 percent), from 2.8 percent to 3.3 percent molybdenum, from 5 percent to 5.4 percent niobium, from 0.2 percent to 2 percent tantalum (more preferably from 0.8 percent to 1.2 percent tantalum, and most preferably 1 percent tantalum), from 0.65 percent to 1.15 percent titanium, from 0.2 percent to 0.8 percent aluminum, from 0.01 percent to 0.05 percent carbon, from 0.005 percent to 0.01 percent boron, less than 0.1 percent zirconium, balance nickel and impurities, said composition comprising gamma double prime (γ") phase (Ni₃ (N_{b}, Ta, Al, Ti)) precipitates. In a preferred embodiment, the composition consists essentially of, in weight percent, 17.84 percent chromium, 9.03 percent cobalt, 8.93 percent iron, 2.97 percent molybdenum, 5.15 percent niobium, 0.99 percent tantalum, 0.99 percent titanium, 0.48 percent aluminum, 0.033 percent carbon, 0.007 percent boron, less than 0.1 percent zirconium balance nickel and impurities.

A forged article is provided by first providing a billet, heating the billet to an initial forging temperature of from 982°C (1800°F) to 1149°C 2100°F, and forging the billet beginning at the initial forging temperature. Typically, after forging the forged billet is heat treated and machined to form a forged article. The forged article is operable over a wide range of service temperatures, but it achieves its greatest benefits over other alloys when placed into service at a maximum service temperature of from 593°C (1100°F) to 704°C (1300°F).

There is little surface cracking during the forging of the present alloy. The result is improved forging and efficiency of material utilization. The forging may be made only slightly oversize relative to the final article, so that material wastage is reduced as compared with that experienced in other alloys that would be suitable for applications at the high service temperatures. Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a longitudinal sectional view of a low-pressure turbine case of a gas turbine engine;
Figure 2 is a block flow diagram of a preferred approach for practicing the invention by forging;
Figure 3 is a block flow diagram of a preferred approach for practicing the invention by welding;
Figure 4 is a schematic sectional view of a forged and surface-welded article;
Figure 5 is a schematic sectional view of two articles welded together;
Figure 6 is a graph of ultimate tensile strength of three alloys at 538°C (1000°F) and 704°C (1300°F);
Figure 7 is an idealized microstructure of Alloy 718 after stability testing; and
Figure 8 is an idealized microstructure of Alloy 991 after stability testing.

### DETAILED DESCRIPTION OF THE INVENTION

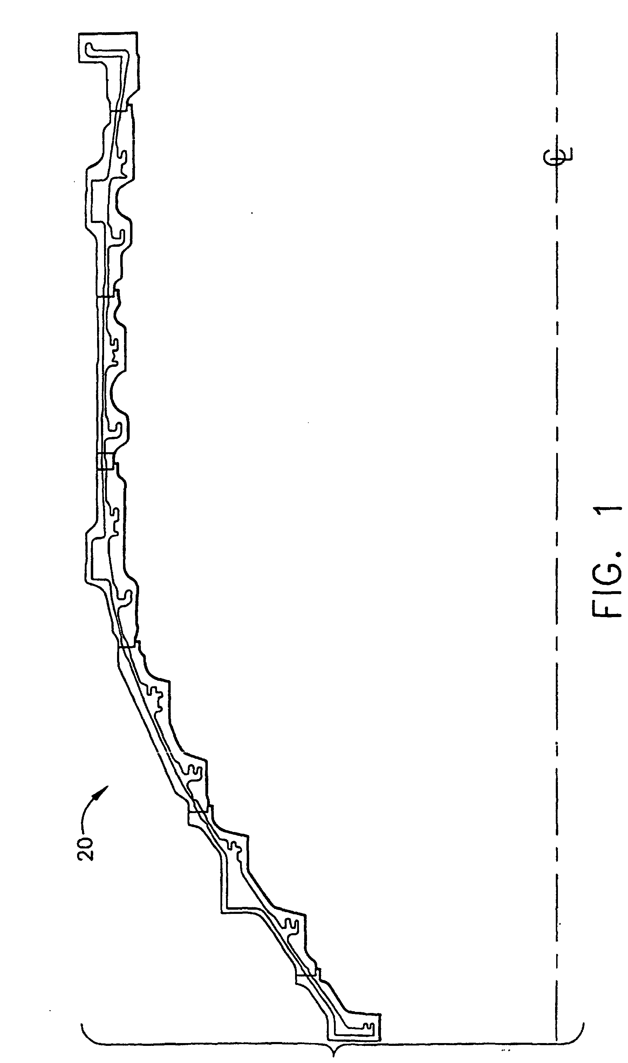

Figure 1 is a perspective view of a forged article of manufacture, illustrated as a low-pressure turbine case 20 of a gas turbine engine. The low-pressure turbine case 20 is a relatively thin-walled, hollow body that is generally cylindrically symmetric about its centerline. The low-pressure turbine case 20 experiences a maximum service temperature of about 704°C (1300°F), which is too high a temperature to use Alloy 718 as its material of construction. Under conventional practice the low-pressure turbine case 20 would be forged of a higher-temperature alloy such as Waspaloy or Rene' 41. However, these latter higher-temperature alloys are difficult and expensive to forge and weld, leading to excessive cost for the low-pressure turbine case 20.

In the present approach, the article has a composition consisting of, in weight percent, from 16 percent to 21 percent chromium, from 6 percent to 12 percent iron (more preferably from 8 percent to 9.5 percent iron, and most preferably 9 percent iron), from 6 percent to 12 percent cobalt (but preferably with the total of iron and cobalt 18 percent), from 2.8 percent to 3.3 percent molybdenum, from 5 percent to 5.4 percent niobium, from 0.2 percent to 2 percent tantalum (more preferably from 0.8 percent to 1.2 percent tantalum, and most preferably 1 percent tantalum), from 0.65 percent to 1.15 percent titanium, from 0.2 percent to 0.8 percent aluminum, from 0.01 percent to 0.05 percent carbon, from 0.005 percent to 0.01 percent boron, less than 0.1 percent zirconium, balance nickel and impurities, said composition comprising gamma double prime (γ") phase (Ni₃ (Nb, Ta, Al, Ti)) precipitates. In a preferred embodiment, the composition consists of, in weight percent, 17.84 percent chromium, 9.03 percent cobalt, 8.93 percent iron, 2.97 percent molybdenum, 5.15 percent niobium, 0.99 percent tantalum, 0.99 percent titanium, 0.48 percent aluminum, 0.033 percent carbon, 0.007 percent boron, less than 0.01 percent zirconium, balance nickel and impurities.

These elements function cooperatively to achieve the required balance of properties and may not be individually altered without affecting the properties of the alloy as a whole.

This alloy is nickel base, having more nickel than any other element. After processing, the alloy has a microstructure including body centered tetragonal gamma double prime (Ni₃(Nb,Ta,Al,Ti)) precipitates, which harden the nickel-base solid-solution alloy matrix.

The chromium, iron, cobalt, and molybdenum partition primarily to the nickel-base alloy matrix.

Chromium imparts oxidation and corrosion resistance to the matrix. If the chromium content is greater than the indicated maximum, alpha-chromium and sigma phase may be present to cause embrittlement. If the chromium content is less than the indicated minimum, oxidation resistance is reduced with an attendant increase in time-dependent crack growth rates.

Iron is present in the matrix as a solid solution strengthening element. However, a high iron content also causes incipient melting of the alloy and accelerates the precipitation kinetics of the body centered tetragonal gamma double prime phase at elevated temperature. The reduction in iron as compared with Alloy 718 increases the solidus temperature so that the alloy is workable at a higher service temperature than Alloy 718. The iron also reduces surface cracking of the alloy by improving malleability. If the iron content is greater than the indicated maximum, incipient melting may occur with the precipitation of brittle Laves phases. If the iron content is less than the indicated minimum, malleability suffers and the elemental cost increases.

Cobalt substitutes for iron in the matrix, without significantly affecting the morphology of the body centered tetragonal gamma double prime precipitate, but significantly reduces precipitation kinetics resulting in stability improvements at elevated temperature relative to Alloy 718. That is, preferably the cobalt plus iron totals about 17-19, preferably 18, weight percent.

Molybdenum is a strong solid solution hardener in the matrix. If the molybdenum content is greater than the indicated maximum, an embrittling Laves phase may precipitate. If the molybdenum content is less than the indicated minimum, matrix strength properties are insufficient.

Carbon aids in pinning grain boundaries to avoid excessive coarsening by the formation of carbides with niobium and tantalum at the grain boundaries. If the carbon content is greater than the indicated maximum, low-cycle fatigue performance suffers. If the carbon content is less than the indicated minimum, there is poor creep performance.

Boron produces borides which aid in achieving ductility at elevated temperatures. If the boron content is greater than the indicated maximum, there may be incipient melting of the borides. If the boron content is less than the indicated minimum, hot ductility is insufficient.

Under the proper processing conditions, titanium and aluminum combine with nickel to primarily form ordered face centered cubic gamma prime precipitate, denoted generally as Ni₃(Al,Ti). Although the alloy is primarily strengthened by coarse body centered tetragonal gamma double prime precipitate, fine gamma prime also precipitates in the matrix to strengthen it.

Titanium partitions primarily to the gamma prime and gamma double prime precipitates. If the titanium content is greater than the indicated maximum, a needle-like eta phase (Ni₃Ti) may precipitate leading to embrittlement. If the titanium content is less than the indicated minimum, the strengthening gamma prime and gamma double prime precipitates may be less effective and oxidation resistance suffers.

Aluminum partitions primarily to the gamma prime and gamma double prime phases. If the aluminum content is greater than the indicated maximum, too much gamma prime phase may form, leading to a reduction in malleability and ductility. If the aluminum content is less than the indicated minimum, little or no gamma prime phase precipitates and oxidation resistance is reduced.

Under the proper processing conditions, niobium combines with nickel, tantalum, aluminum, and titanium to form the body centered tetragonal gamma double prime precipitate, denoted generally as Ni₃(Nb,Ta,Al,Ti). If the niobium content is greater than the indicated maximum, there is unacceptable macrosegregation which adversely affects malleability and mechanical properties. If the niobium content is less than the indicated minimum, the result is insufficient stability at elevated temperature resulting in reduced strength over time.

It is absolutely essential that the body centered tetragonal gamma double prime precipitate be more thermodynamically stable in the present alloy at the elevated service temperatures than it is in Alloy 718. Tantalum is a large atom which participates in the formation of the body centered tetragonal gamma double prime phase. Tantalum also diffuses slowly so that the resulting body centered tetragonal gamma double prime phase is more thermodynamically stable when tantalum is present than when it is absent. Tantalum must therefore be present in an amount exceeding about 0.2 percent, or the body centered tetragonal gamma double prime precipitate will not have sufficient stability at elevated temperatures. However, if tantalum is present in an amount of more than about 2 percent, there is macrosegregation similar to that experienced with excessive niobium and there is an excessive increase in elemental costs.

It is sometimes the case in describing nickel-base alloys that the sum of niobium plus tantalum, Nb+Ta, is expressed. There is an implicit suggestion in such an expression that the niobium and tantalum may substitute for each other without significant effect on the final properties of the alloy. That is not the case in the present composition. The niobium and the tantalum must each individually be within the limits discussed herein.

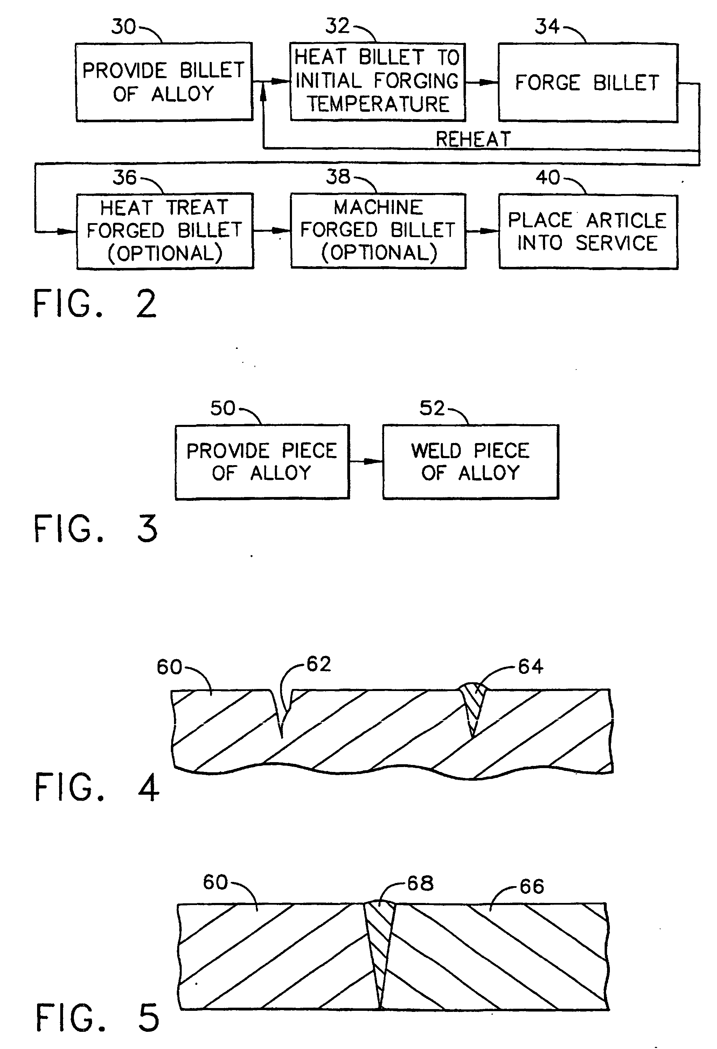

Figure 2 depicts an approach for preparing and using an article such as the low-pressure turbine case 20. A billet of the alloy set forth herein is provided, numeral 30. To provide the billet by the usual approach, a heat of the alloy is melted and cast into an mold. The resulting ingot is thermomechanically reduced in size to a billet having a reduced and more uniform grain size than the ingot, a process termed ingot conversion.

The billet is heated to an initial forging temperature, numeral 32, usually in a furnace. The initial forging temperature of billets of the present alloy is preferably from 982°C (1800°F) to 1149°C 2100°F. The billet is then forged, numeral 34, beginning at the initial forging temperature. As the billet is forged, it gradually cools. If the forging is sufficiently prolonged that the billet cools below the indicated minimum forging temperature during the course of the forging, the steps 32 and 34 may be repeated, as indicated by the "reheat" arrow in Figure 2.

After cooling to room temperature, the forged billet is optionally heat treated, step 36, and machined, step 38, to produce the final forged article. A typical heat treatment to precipitate primarily gamma double prime phase to strengthen the article is performed at a temperature of from 704°C (1300°F) to 788°C (1450°F), for a time of from 4 hours to 16 hours. The selected aging temperature is tailored to provide the required property balance, with the final aging temperature preferably no lower than the application temperature minus 28°C (50°F) A duplex, two-step aging cycle may also be used for this alloy system.

The article is placed into service, numeral 40. The article produced by the present approach may be used at room and intermediate temperatures, but its greatest benefits are realized when it is used for extended service at higher temperatures than possible with Alloy 718, such as from 621°C (1150°F) to 704°C (1300°F).

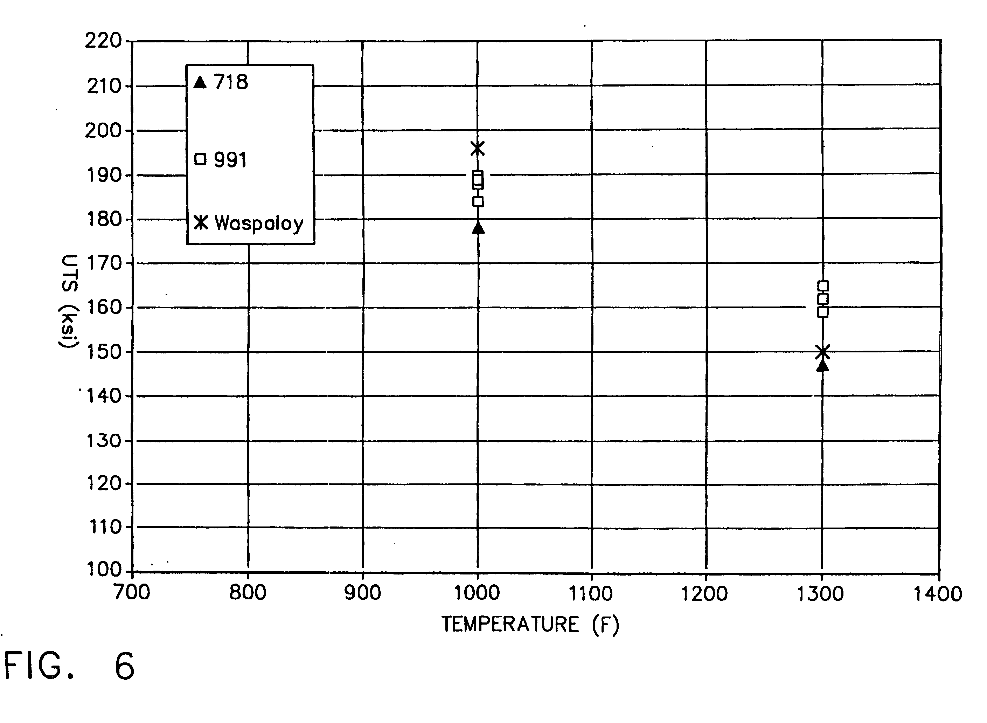

The present alloy composition is also readily welded, in addition to its excellent forgeability. Figure 3 depicts an approach for welding the alloy, and Figures 4-5 depict welded structures. A piece 60 of the alloy discussed previously is provided, numeral 50. The piece 60 of the alloy may be a forged piece, as illustrated in Figure 4, or otherwise. For example, the piece 60 of the alloy may be that produced at the conclusion of any of the steps 30, 32, 34, 36, 38, or even 40 of the method of Figure 2, or it may be produced by any other operable approach. The piece 60 is welded, numeral 52. The welding may be accomplished, numeral 52, by any operable approach, with or without a filler metal. Where used, the filler metal is preferably of the same composition as the piece 60. Examples of operable welding approaches are plasma welding and TIG welding. In Figure 4, surface cracks 62 in the single piece 60 of the alloy are welded closed with a filler metal of the same alloy composition as the piece 60, to produce a filled crack 64. In Figure 6 the piece 60 is welded to a second piece 66 at a weld joint 68 of the filler metal. The second piece 66 may be the same composition as the piece 60, or a different composition.

The present invention has been reduced to practice and comparatively evaluated with Alloy 718 and Waspaloy, the closest competitive alloys. As discussed earlier, Alloy 718 has excellent forgeability and weldability, but insufficient mechanical properties above 621°C (1150°F). Waspaloy has good mechanical properties up to 704°C (1300°F), but is forgeable and weldable only with difficulty.

In the reduction to practice and the comparative testing, the present alloy, denominated Alloy 991 in the testing, had a nominal composition, in weight percent, of 17.84 percent chromium, 9.03 percent cobalt, 8.93 percent iron, 2.97 percent molybdenum, 5.15 percent niobium, 0.99 percent tantalum, 0.99 percent titanium, 0.48 percent aluminum, 0.033 percent carbon, 0.007 percent boron, less than 0.01 percent zirconium, balance nickel and impurities. The "991" nomenclature is based on the preferred composition of the alloy of 9 percent cobalt, 9 percent iron, and 1 percent tantalum.

The Alloy 718 had a nominal composition, in weight percent, of 17.86 percent chromium, 0.01 percent cobalt, 18.06 percent iron, 2.99 percent molybdenum, less than 0.01 percent tungsten, 0.03 percent copper, 5.28 percent niobium, less than 0.01 percent manganese, 0.02 percent vanadium, less than 0.01 percent tantalum, 0.99 percent titanium, 0.49 percent aluminum, 0.03 percent carbon, less than 0.1 percent zirconium, balance nickel and impurities.

The Waspaloy baseline material had a nominal composition, in weight percent, of 19.02 percent chromium, 13.13 percent cobalt, 0.55 percent iron, 4.18 percent molybdenum, 0.01 percent niobium, 0.02 percent tantalum, less than 0.01 percent tungsten, less than 0.01 percent copper, 0.01 percent manganese, 0.01 percent vanadium, less than 0.01 percent silicon, 2.98 percent titanium, 1.41 percent aluminum, 0.03 percent carbon, less than 0.06 percent zirconium, balance nickel and impurities.

In forging and weldability trials, the Alloy 991 and the Alloy 718 had excellent forgeability and weldability, evaluated qualitatively. The Waspaloy baseline alloy was difficult to forge and weld, and showed extensive surface cracking during forging.

The alloys were tensile tested at 538°C (1000°F) and 704°C (1300°F), and the results are shown in Figure 6. The Alloy 991 achieved the best performance of the three alloys at 704°C (1300°F).

The alloys were tested in creep at 649°C (1200°F) and 9384.5 MPa (98,000 pounds per square inch) load. The accepted measure of performance is the time to creep to 0.2 percent strain, with longer times being better. The Alloy 718 had creep times ranging from 40 to 105 hours. The Alloy 991 had creep times ranging from 155 to more than 210 hours (testing was terminated at 210 hours). The Waspaloy had creep times ranging from 155 to more than 215 hours (testing was terminated at 215 hours). The Alloy 718 is not suitable for service at this temperature, while the Alloy 991 had properties comparable with those of Waspaloy.

The thermodynamic stability of the alloys at the required service temperatures is an important consideration. To evaluate the thermodynamic stability, specimens were subjected to creep loading at 649°C (1200°F) for 212 hours at a loading of 9384.5 MPa (98,000 pounds per square inch), and thereafter exposed to a temperature of 760°C (1400°F) for 100 hours. The specimens were thereafter tensile tested at 704°C (1300°F). Comparison specimens were not subjected to the creep testing and exposure a 760°C (1400°F), but were tensile tested at 704°C (1300°F). In each case, the UTS ratio is the ratio of the ultimate tensile strength of the exposed specimens to the ultimate tensile strength of the unexposed specimens. The YS ratio is the ratio of the 0.2 percent yield strength of the exposed specimens to the 0.2 percent yield strength of the unexposed specimens. A ratio of close to 1 is desirable in each case. For the Alloy 718, the UTS ratio is about 0.8, and the YS ratio is about 0.66. For the Alloy 991, the UTS ratio is about 0.91, and the YS ratio is about 0.87. For the Waspalloy, the UTS ratio is about 1.05, and the YS ratio is about 1.04. Alloy 718 has significant degradation of properties in this test, Alloy 991 has moderate but acceptable degradation of properties, and Waspaloy actually has an improvement in properties.

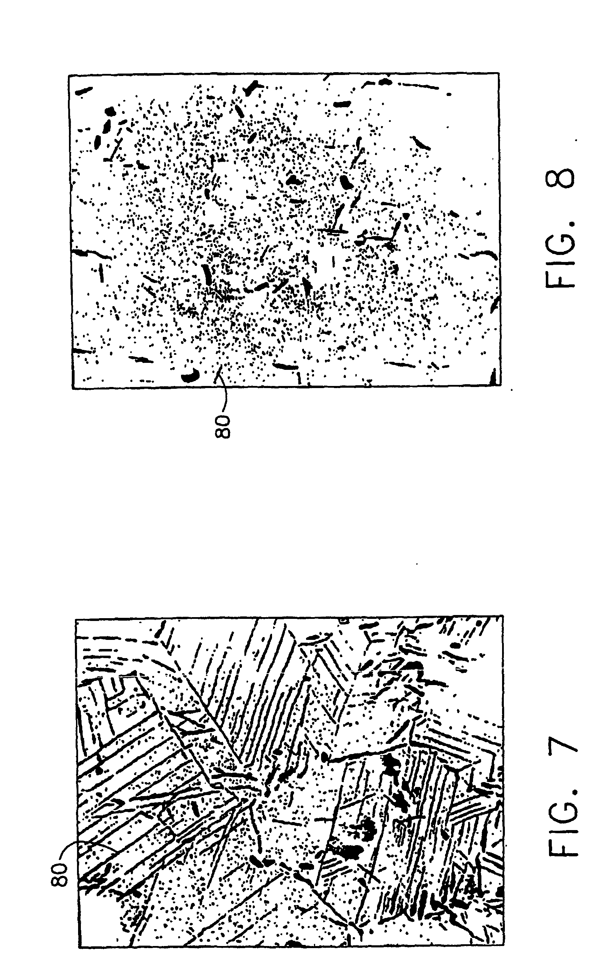

The specimens in the stability testing were inspected metallographically, and Figures 7 and 8 show the microstructures of Alloy 718 and Alloy 991 respectively. The Alloy 718 has extensive degradation by precipitation of delta-phase platelets 80, while the Alloy 991 shows some very slight but acceptable precipitation of delta-phase platelets 80.

It is believed that the unique combination of good forgeability and weldability and also acceptable mechanical properties in the range of 621°C (1150°F) to 704°C (1300°F) of the present material is based on its quaternary Ni-Cr-Fe-Co alloying chemistry and the resulting precipitation kinetics. This quaternary alloying chemistry is, in turn, based on the balance of cobalt and iron, and additionally on the presence of the optimal amount of tantalum. This alloy utilizes the body-centered-tetragonal gamma double prime phase of the ternary Ni-Fe-Cr system as the basis of its quaternary Ni-Cr-Fe-Co strengthening phase but overages much slower than a Ni-Fe-Cr alloy such as Alloy 718 due in part to the presence of the optimal amount of tantalum. The Alloy 718 tends to overage rapidly and has poor creep strength at higher temperatures. Ternary Ni-Cr-Co alloys such as Waspaloy are strengthened by the ordered face centered cubic gamma prime Ni₃(Al,Ti) phase. This strengthening mechanism imparts improved creep properties with slower overaging at elevated temperatures, but the alloys have limited forgeability and limited weldability due to strain age cracking caused by rapid re-precipitation of gamma prime during solidification and post-weld heat treatment. The slower aging kinetics of the present Ni-Cr-Fe-Co alloys with an optimal amount of tantalum results in less brittleness during forging and welding operations than experienced in ternary Ni-Cr-Co alloys, but sufficient strength is achieved for the service temperatures and the strengthening precipitate is stable.

## Claims

1. A nickel base alloy having a composition consisting of, in weight percent, from 16 percent to 21 percent chromium, from 6 percent to 12 percent iron, from 6 percent to 12 percent cobalt, from 2.8 percent to 3.3 percent molybdenum, from 5 percent to 5.4 percent niobium, from 0.2 percent to 2 percent tantalum, from 0.65 percent to 1.15 percent titanium, from 0.2 percent to 0.8 percent aluminum, from 0.01 percent to 0.05 percent carbon, from 0.005 percent to 0.01 percent boron, less than 0.1 percent zirconium, balance nickel and impurities, said composition comprising gamma double prime (γ") phase (Ni₃(Nb, Ta, Al, Ti)) precipitates.

2. The composition of matter of claim 1, wherein the total of iron plus cobalt is from 17 to 19 percent.

3. The composition of matter of claim 1, wherein the iron content is from 8 percent to 9.5 percent.

4. The composition of matter of claim 1, wherein the iron content is 9 percent.

5. The composition of matter of claim 1, wherein the tantalum content is from 0.8 percent to 1.2 percent.

6. The composition of matter of claim 1, wherein the tantalum content is 1 percent.

7. The nickel base alloy of claim 1 having a composition consisting of, in weight percent, 17.84 percent chromium, 9.03 percent cobalt, 8.93 percent iron, 2.97 percent molybdenum, 5.15 percent niobium, 0.99 percent tantalum, 0.99 percent titanium, 0.48 percent aluminum, 0.033 percent carbon, 0.007 percent boron, less than 0.01 percent zirconium, balance nickel and impurities.

8. A method of providing a forged article (20), comprising the steps of:
providing a billet having a composition consisting of, in weight percent, from 16 percent to 21 percent chromium, from 6 percent to 12 percent iron, from 6 percent to 12 percent cobalt, from 2.8 percent to 3.3 percent molybdenum, from 5 percent to 5.4 percent niobium, from 0.2 percent to 2 percent tantalum, from 0.65 percent to 1.15 percent titanium, from 0.2 percent to 0.8 percent aluminum, from 0.01 percent to 0.05 percent carbon, from 0.005 percent to 0.01 percent boron, less than 0.1 percent zirconium, balance nickel and impurities;
heating the billet to an initial forging temperature of from 982°C (1800°F) to 1149°C (2100°F); and
forging the billet beginning at the initial forging temperature.

9. The method of claim 8, wherein the step of providing the billet includes the step of
providing the billet having an iron content of from 8 percent to 9.5 percent.

10. The method of claim 8, wherein the step of providing the billet includes the step of
providing the billet having an iron content of 9 percent.

11. The method of claim 8, wherein the step of providing the billet includes the step of
providing a billet having a tantalum content of from 0.8 percent to 1.2 percent.

12. The method of claim 8, wherein the step of providing the billet includes the step of
providing a tantalum content of 1 percent.

13. The method of claim 8, wherein the step of providing the billet includes the step of
providing the billet having a composition consisting essentially of, in weight percent, 17.84 percent chromium, 9.03 percent cobalt, 8.93 percent iron, 2.97 percent molybdenum, 5.15 percent niobium, 0.99 percent tantalum, 0.99 percent titanium, 0.48 percent aluminum, 0.033 percent carbon, 0.007 percent boron, less than 0.01 percent zirconium, balance nickel and impurities.

14. The method of claim 8, including the additional steps, after the step of forging, of
heat treating the forged billet, and
machining the forged billet to form a finished article.

15. The method of claim 14, including an additional step, after the step of machining, of
placing the forged article into service at a service temperature of about 704°C (1300°F),

16. The method of claim 8, including an additional step, after the step of forging, of
welding the forged article.

17. A method of preparing a welded article, comprising the steps of:
providing a piece of material (60) having a composition consisting essentially of, in weight percent, from 16 percent to 21 percent chromium, from 6 percent to 12 percent iron, from 6 percent to 12 percent cobalt, from 2.8 percent to 3.3 percent molybdenum, from 5 percent to 5.4 percent niobium, from 0.2 percent to 2 percent tantalum, from 0.65 percent to 1.15 percent titanium, from 0.2 percent to 0.8 percent aluminum, from 0.01 percent to 0.05 percent carbon, from 0.005 percent to 0.01 percent boron, less than 0.1 percent zirconium, balance nickel and impurities; and
welding the piece of material (60).

18. The method of claim 17, wherein the step of welding includes the step of surface welding the piece of material (60).

19. The method of claim 17, wherein the step of welding includes the step of joining the piece of material (60) to a second piece of material (66).

## Patentansprüche

1. Nickelbasislegierung mit einer Zusammensetzung bestehend aus, in Gewichtsprozent, von 16 Prozent bis 21 Prozent Chrom, von 6 Prozent bis 12 Prozent Eisen, von 6 Prozent bis 12 Prozent Kobalt, von 2,8 Prozent bis 3.3 Prozent Molybdän, von 5 Prozent bis 5,4 Prozent Niob, von 0,2 Prozent bis 2 Prozent Tantal, von 0,65 Prozent bis 1,15 Prozent Titan, von 0,2 Prozent bis 0,8 Prozent Aluminium, von 0,01 Prozent bis 0,05 Prozent Kohlenstoff, von 0,005 Prozent bis 0,01 Prozent Bor, weniger als 0,1 Prozent Zirkon, Rest Nickel und Verunreinigungen, wobei die Zusammensetzung Gamma-Doppelstrich(γ")-Phase (Ni₃(Nb,Ta,Al,Ti)) Ausscheidungen enthält.

2. Zusammensetzung nach Anspruch 1, wobei der Gesamtgehalt von Eisen plus Kobalt 17 bis 19 Prozent beträgt.

3. Zusammensetzung nach Anspruch 1, wobei der Eisengehalt von 8 Prozent bis 9,5 Prozent beträgt.

4. Zusammensetzung nach Anspruch 1, wobei der Eisengehalt 9 Prozent beträgt.

5. Zusammensetzung nach Anspruch 1, wobei der Tantalgehalt von 0,8 bis 1,2 Prozent beträgt.

6. Zusammensetzung nach Anspruch 1, wobei der Tantalgehalt 1 Prozent beträgt.

7. Nickelbasislegierung nach Anspruch 1 mit einer Zusammensetzung bestehend aus, in Gewichtsprozent, 17,84 Prozent Chrom, 9,03 Prozent Kobalt, 8,93 Prozent Eisen, 2,97 Prozent Molybdän, 5,15 Prozent Niob, 0,99 Prozent Tantal, 0,99 Prozent Titan, 0,48 Prozent Aluminium, 0,033 Prozent Kohlenstoff, 0,007 Prozent Bor, weniger als 0,01 Prozent Zirkon, Rest Nickel und Verunreinigungen.

8. Verfahren zum Bereitstellen eines geschmiedeten Gegenstandes (20), enthaltend die Schritte:
Bereitstellen eines Barrens mit einer Zusammensetzung bestehend aus, in Gewichtsprozent, von 16 Prozent bis 21 Prozent Chrom, von 6 Prozent bis 12 Prozent Eisen, von 6 Prozent bis 12 Prozent Kobalt, von 2,8 Prozent bis 3.3 Prozent Molybdän, von 5 Prozent bis 5,4 Prozent Niob, von 0,2 Prozent bis 2 Prozent Tantal, von 0,65 Prozent bis 1,15 Prozent Titan, von 0,2 Prozent bis 0,8 Prozent Aluminium, von 0,01 Prozent bis 0,05 Prozent Kohlenstoff, von 0,005 Prozent bis 0,01 Prozent Bor, weniger als 0,1 Prozent Zirkon, Rest Nickel und Verunreinigungen,
Erwärmen des Barrens auf eine Anfangsschmiedetemperatur von 982°C (1800°F) bis 1149°C (2100°F).

9. Verfahren nach Anspruch 8, wobei der Schritt des Bereitstellens des Barrens den Schritt enthält
Bereitstellen des Barrens mit einem Eisengehalt von 8 Prozent bis 9,5 Prozent.

10. Verfahren nach Anspruch 8, wobei der Schritt des Bereitstellens des Barrens den Schritt enthält
Bereitstellen des Barrens mit einem Eisengehalt von 9 Prozent.

11. Verfahren nach Anspruch 8, wobei der Schritt des Bereitstellens des Barrens den Schritt enthält
Bereitstellen des Barrens mit einem Tantalgehalt von 0,8 Prozent bis 1,2 Prozent.

12. Verfahren nach Anspruch 8, wobei der Schritt des Bereitstellens des Barrens den Schritt enthält
Bereitstellen eines Tanatlgehaltes von 1 Prozent.

13. Verfahren nach Anspruch 8, wobei der Schritt des Bereitstellens des Barrens den Schritt enthält
Bereitstellen eines Barrens mit einer Zusammensetzung bestehend aus, in Gewichtsprozent, 17,84 Prozent Chrom, 9,03 Prozent Kobalt, 8,93 Prozent Eisen, 2,97 Prozent Molybdän, 5,15 Prozent Niob, 0,99 Prozent Tantal, 0,99 Prozent Titan, 0,48 Prozent Aluminium, 0,033 Prozent Kohlenstoff, 0,007 Prozent Bor, weniger als 0,01 Prozent Zirkon, Rest Nickel und Verunreinigungen.

14. Verfahren nach Anspruch 8, enthaltend die zusätzlichen Schritte nach dem Schmiedeschritt
Wärmebehandeln des geschmiedeten Barrens und
Bearbeiten des geschmiedeten Barrens zum Formen des fertigen Gegenstandes.

15. Verfahren nach Anspruch 14, enthaltend einen zusätzlichen Schritt nach dem Bearbeitungsschritt
Einbringen des geschmiedeten Gegenstandes in Betrieb bei einer Betriebstemperatur von etwa 704°C (1300°F).

16. Verfahren nach Anspruch 8, enthaltend einen zusätzlichen Schritt nach dem Schmiedeschritt
Schweißen des geschmiedeten Gegenstandes.

17. Verfahren zum Herstellen eines geschmiedeten Gegenstandes, enthaltend die Schritte:
Bereitstellen eines Materialstückes (60) mit einer Zusammensetzung bestehend aus, in Gewichtsprozent, von 16 Prozent bis 21 Prozent Chrom, von 6 Prozent bis 12 Prozent Eisen, von 6 Prozent bis 12 Prozent Kobalt, von 2,8 Prozent bis 3.3 Prozent Molybdän, von 5 Prozent bis 5,4 Prozent Niob, von 0,2 Prozent bis 2 Prozent Tantal, von 0,65 Prozent bis 1,15 Prozent Titan, von 0,2 Prozent bis 0,8 Prozent Aluminium, von 0,01 Prozent bis 0,05 Prozent Kohlenstoff, von 0,005 Prozent bis 0,01 Prozent Bor, weniger als 0,1 Prozent Zirkon, Rest Nickel und Verunreinigungen, und
Schweissen des Materialstückes (60).

18. Verfahren nach Anspruch 17, wobei der Schweißschritt den Schritt enthält, dass das Materialstück (60) oberflächengeschweißt wird.

19. Verfahren nach Anspruch 17, wobei der Schweißschritt den Schritt enthält, dass das Materialstück (60) mit einem zweiten Materialstück (66) verbunden wird.

## Revendications

1. Alliage à base de nickel qui contient, en pourcentages en poids, 16% à 21% de chrome, 6% à 12% de fer, 6% à 12% de cobalt, 2,8% à 3,3% de molybdène, 5% à 5,4% de niobium, 0,2% à 2% de tantale, 0,65% à 1,15% de titane, 0,2% à 0,8% d'aluminium, 0,01 % à 0,05% de carbone, 0,005% à 0,01% de bore, et moins de 0,1% de zirconium, le complément étant constitué de nickel et d'impuretés, ledit alliage à base de nickel comprenant des précipités de phase γ" (Ni₃ (Nb, Ta, Al, Ti)).

2. Alliage à base de nickel selon la revendication 1, qui contient au total 17 à 19% de fer et de cobalt.

3. Alliage à base de nickel selon la revendication 1, qui contient 8% à 9,5% de fer.

4. Alliage à base de nickel selon la revendication 1, qui contient 9% de fer.

5. Alliage à base de nickel selon la revendication 1, qui contient 0,8% à 1,2% de tantale.

6. Alliage à base de nickel selon la revendication 1, qui contient 1% de tantale.

7. Alliage à base de nickel selon la revendication 1, qui contient, en pourcentages en poids, 17,84% de chrome, 9,03% de cobalt, 8,93% de fer, 2,97% de molybdène, 5,15% de niobium, 0,99% de tantale, 0,99% de titane, 0,48% d'aluminium, 0,033% de carbone, 0,007% de bore, et moins de 0,01% de zirconium, le complément étant constitué de nickel et d'impuretés.

8. Procédé de production d'une pièce forgée (20), qui comprend les étapes consistant à :
prendre une billette contenant, en pourcentages en poids, 16% à 21% de chrome, 6% à 12% de fer, 6% à 12% de cobalt, 2,8% à 3,3% de molybdène, 5% à 5,4% de niobium, 0,2% à 2% de tantale, 0,65% à 1,15% de titane, 0,2% à 0,8% d'aluminium, 0,01% à 0,05% de carbone, 0,005% à 0,0.1% de bore, et moins de 0,1% de zirconium, le complément étant constitué de nickel et d'impuretés ;
chauffer la billette à une température de forgeage initiale de 982°C (1800°F) à 1149°C (2100°F) ; et
forger la billette en commençant à la température de forgeage initiale.

9. Procédé selon la revendication 8, dans lequel la billette prise a une teneur en fer de 8% à 9,5%.

10. Procédé selon la revendication 8, dans lequel la billette prise a une teneur en fer de 9%.

11. Procédé selon la revendication 8, dans lequel la billette prise a une teneur en tantale de 0,8% à 1,2%.

12. Procédé selon la revendication 8, dans lequel la billette prise a une teneur en tantale de 1%.

13. Procédé selon la revendication 8, dans lequel la billette prise contient, en pourcentages en poids, 17,84% de chrome, 9,03% de cobalt, 8,93% de fer, 2,97% de molybdène, 5,15% de niobium, 0,99% de tantale, 0,99% de titane, 0,48% d'aluminium, 0,033% de carbone, 0,007% de bore, et moins de 0,01% de zirconium, le complément étant constitué de nickel et d'impuretés.

14. Procédé selon la revendication 8, qui comprend après l'étape de forgeage, les étapes supplémentaires de traitement thermique de la billette forgée et d'usinage de la billette forgée pour former une pièce finie.

15. Procédé selon la revendication 14, qui comprend après l'étape d'usinage, une étape supplémentaire de mise en service de la pièce forgée, à une température d'utilisation d'environ 704°C (1300°F).

16. Procédé selon la revendication 8, qui comprend après l'étape de forgeage, une étape supplémentaire de soudage de la pièce forgée.

17. Procédé de préparation d'une pièce soudée, qui comprend les étapes consistant à :
prendre un morceau de matériau (60) contenant, en pourcentages en poids, 16% à 21% de chrome, 6% à 12% de fer, 6% à 12% de cobalt, 2,8% à 3,3% de molybdène, 5% à 5,4% de niobium, 0,2% à 2% de tantale, 0,65% à 1,15% de titane, 0,2% à 0,8% d'aluminium, 0,01% à 0,05% de carbone, 0,005% à 0,01 % de bore, et moins de 0,1 % de zirconium, le complément étant constitué de nickel et d'impuretés ; et
souder le morceau de matériau (60).

18. Procédé selon la revendication 17, dans lequel l'étape de soudage comprend le soudage en surface du morceau de matériau (60).

19. Procédé selon la revendication 17, dans lequel l'étape de soudage comprend la réunion du morceau de matériau (60) à un second morceau de matériau (66).
